# EUROPÄISCHE PATENTSCHRIFT

(11) **EP 0 644 976 B1**
(45) Veröffentlichungstag und Bekanntmachung des Hinweises auf die Patenterteilung: **08.09.1999**
(21) Anmeldenummer: 93912942.5
(22) Anmeldetag: 09.06.1993
(51) Int. Cl.: E05D 7/10, E05D 5/02

(54) **SCHARNIER**
HINGE
CHARNIERE

(30) Priorität: 10.06.1992 DE 9207804 U; 03.11.1992 DE 9214963 U
(43) Veröffentlichungstag der Anmeldung: 29.03.1995
(73) Patentinhaber: Knürr Mechanik für die Elektronik AG, D-81829 München (DE)
(72) Erfinder: FLAMME, Hans, D-8025 Unterhaching (DE)
(74) Vertreter: Heim, Hans-Karl, Dipl.-Ing.
(86) Internationale Anmeldenummer: EP9301472
(87) Internationale Veröffentlichungsnummer: WO9325790

(56) Entgegenhaltungen:
- DE-A- 3 705 131
- FR-A- 2 669 073
- GB-A- 983 414
- US-A- 4 010 504

## Beschreibung

Die Erfindung betrifft ein Scharnier, insbesondere ein Türscharnier für Schalt- und Geräteschränke, gemäß dem Oberbegriff des Anspruchs 1.

Aus der EP 0 157 344 B1 ist ein Türscharnier mit einem ersten, an der Innenseite einer Schranktür befestigten Scharnierteil mit einem Lagerauge und mit einem zweiten, schrankseitigen Scharnierteil bekannt. Das schrankseitige Scharnierteil weist zwei Lageraugen an einer Befestigungsplatte auf, zwischen denen das türseitige Lagerauge angeordnet und über zwei, jeweils in ein schrankseitiges Lagerauge einführbare Scharnierbolzen verbunden werden kann.

Um eine Flügeltür, beispielsweise zu Montage- oder Wartungsarbeiten, entfernen zu können, ist eine Lösung der Gelenkverbindung bei möglichst unverlierbar gehaltenen Scharnierbolzen erforderlich. Zu diesem Zweck weisen die Scharnierbolzen jeweils zwei voneinander beabstandete Rastnuten auf, in die eine an jedem schrankseitigen Lagerauge festgelegte Rastfeder eingreifen kann, so daß die Scharnierbolzen, bezogen auf das türseitige Lagerauge bzw. das türseitige Scharnierteil in einer Entkoppelungsstellung und einer Koppelungsstellung gehalten werden können. Außerdem sind an jedem Scharnierbolzen noch eine Ringnut und ein überstehender Halteabschnitt ausgebildet, um ein Ausheben der Scharnierbolzen gegen die Federkraft mit Hilfe eines geeigneten Werkzeugs, beispielsweise eines Schraubenziehers, bewerkstelligen zu können. Dies erfordert jedoch einige Geschicklichkeit, da die Scharniere oft in einem Bereich einer abgewinkelten Kante der Schranktür angeordnet und nicht leicht zugänglich sind.
Ein weiterer Nachteil dieses bekannten Scharniers ist die relativ aufwendige konstruktive Gestaltung, insbesondere der mit unterschiedlichen Ring- und Rastnuten versehenen Scharnierbolzen, und die dadurch bedingte kostenintensive Fertigung des Scharniers.

Aus der DE 37 05 131 A1 ist ein Scharnierband für Türen, Fenster und dergleichen mit einem türseitigen und einem rahmenseitigen Scharnierteil bekannt. Um eine Herstellung des Scharnierbandes aus stranggepreßten Teilen ohne eine spanabhebende Abtragung größerer Materialmengen zu ermöglichen, besteht das rahmenseitige Scharnierteil aus einem Mittelteil und von diesem Mittelteil ausladenden Scharnierteilen, welche ober-und unterhalb des türseitigen Scharnierteils angeordnet und mit Hilfe eines durchgreifenden Bandbolzens schwenkbar miteinander verbunden sind. Die zwei rahmenseitigen Scharnierteile sind über eine Schwalbenschwanzverbindung an dem Mittelteil befestigt. Im Bereich des türseitigen Scharnierteils ist die Schwalbenschwanznut mit einer Abdeckung versehen. Um die Tür, d.h. das türseitige Scharnierteil, von dem schrankseitigen, mehrteiligen Scharnierteil zu lösen, ist es erforderlich, den Scharnierbolzen zu entnehmen und ein Teil des schrankseitigen Scharnierteils von dem Mittelteil zu entfernen. Eine unverlierbare Halterung der entfernten Teile ist nicht gewährleistet.

Der Erfindung liegt die **Aufgabe** zugrunde, ein Scharnier zu schaffen, das eine besonders einfache Konstruktion und robuste Bauweise aufweist und bevorzugt für 19"-Schränke, Schalt- und Geräteschränke einzusetzen ist, bei denen ein schnelles und unkompliziertes Lösen und Zusammenfügen der Scharnierteile und damit ein Lösen der Tür für eine ungehinderte Zugänglichkeit der Schränke vorteilhaft ist.

Erfindungsgemäß wird die Aufgabe durch die kennzeichnenden Merkmale des Anspruchs 1 gelöst. Vorteilhafte und zweckmäßige Ausgestaltungen sind in den Unteransprüchen und in der Figurenbeschreibung enthalten.

Die Erfindung geht von der Überlegung aus, daß eine besonders einfache Montage und Demontage von Scharnierteilen, beispielsweise zum Befestigen und zum Lösen einer Tür an einem Schrank bzw. an einem Schrank-Gestell, möglich ist, wenn wenigstens ein Scharnierteil, nämlich ein schrankseitiges oder ein türseitiges Scharnierteil, gegebenenfalls auch beide Scharnierteile aus zwei Teilen besteht, die spiegelbildlich zueinander ausgebildet und unabhängig voneinander zu befestigen und in Achsrichtung, bei einem Schrank somit prinzipiell in vertikaler Richtung, relativ zueinander und unabhängig voneinander verstellbar sind.

Erfindungsgemäß besteht ein zweigeteiltes schrankseitiges oder türseitiges Scharnierteil aus einem ersten, beispielsweise unteren und einem zweiten, beispielsweise oberen Scharnierteil, zwischen denen im befestigten Zustand als ein korrespondierendes Scharnierteil ein türseitiges oder schrankseitiges Scharnierteil angeordnet und über mindestens einen Scharnierbolzen schwenkbar gelagert ist.

In einer ersten Ausführungsform der Erfindung weist ein Scharnier ein zweiteiliges schrankseitiges Scharnierteil mit einem unteren schrankseitigen Scharnierteil als erstem schrankseitigen Scharnierteil und einem oberen schrankseitigen Scharnierteil als zweitem schrankseitigen Scharnierteil auf. Ein einteiliges türseitiges Scharnierteil ist mit einem in axialer Richtung über eine Scharnierbolzenabstützung überstehenden Scharnierbolzen versehen, der in ein Lagerauge des oberen schrankseitigen Scharnierteils und in ein Lagerauge des unteren schrankseitigen Scharnierteils eingreift.

Bevorzugt ist eine Ausbildung mit jeweils einem Scharnierbolzen am unteren und oberen schrankseitigen Scharnierteil, wobei die Scharnierbolzen vorzugsweise fest aufgenommen, beispielsweise mit Preßsitz in eine hülsenartige Aufnahme eingebracht sind. Das türseitige Scharnierteil weist dann ein beispielsweise eingerolltes Scharnierauge auf und wird zwischen den zweigeteilten und spiegelbildlich ausgebildeten, über jeweils einen Befestigungsbereich fixierten schrankseitigen Scharnierteilen über deren Scharnierbolzen schwenkbar gehalten.

In einer besonders einfachen Weise ist in jeweils einem Befestigungsflansch des unteren und des oberen schrankseitigen Scharnierteils als ein Befestigungsbereich ein Langloch mit einer komplementären Vertiefung zur Aufnahme einer Senkkopfschraube nahezu mittig ausgebildet. Die Vertiefung für die Senkkopfschraube ist jeweils am scharnierbolzenseitigen Ende des Langlochs angeordnet.

Bei der Montage erfolgt zunächst eine lösbare Befestigung des unteren Scharnierteils, beispielsweise an einem als Hohlprofil ausgebildeten Vertikalholm eines Schrankes bzw. eines Schrankgestelles.

Zweckmäßigerweise wirkt eine Senkkopfschraube mit einer einrastbaren Federmutter, die in einer nahezu quadratischen T-Nut des Vertikalprofils des Schranks drehsicher und längsverschiebbar gehalten ist, zusammen. Beim Lösen, jedoch nicht beim vollständigen Entfernen der Senkkopfschraube, ist entsprechend der Langlochabmessung ein Verstellen jedes schrankseitigen Scharnierteils vom türseitigen Scharnierteil weg möglich, so daß die Scharnierbolzen außer Eingriff mit dem Scharnierauge gelangen. Die Tür kann somit vom Schrank leicht entfernt werden. Bei der Montage der Tür erfolgt zunächst die Befestigung des unteren Scharnierteils, indem die Senkkopfschraube in der zugeordneten Vertiefung festgeschraubt wird. Danach wird die Tür mit ihrem türseitigen Scharnierauge auf den unteren Scharnierbolzen aufgesetzt und anschließend das obere schrankseitige Scharnierteil, das mit Hilfe der im Langloch gelockerten Senkkopfschraube in einer obersten Stellung gehalten war, in Richtung türseitiges Scharnierauge verschoben, so daß der obere Scharnierbolzen ebenfalls eingreift. Zur Halterung der jeweiligen Senkkopfschraube empfiehlt sich eine einrastbare Federmutter. Geeignet sind jedoch auch Schiebe- und einfache Federmuttern, die in einer T-Nut des vertikalen Hohlprofils längsverschiebbar gehalten sind.

Zweckmäßigerweise sollten die vertikalen Abmessungen der Befestigungsflansche und insbesondere der Langlöcher sowie die Scharnierbolzenlänge und die axiale Abmessung des Scharnierauges des türseitigen Scharnierteils aufeinander abgestimmt sein. Dabei ist es vorteilhaft, wenn der Verstellweg zwischen dem oberen und dem unteren Befestigungsflansch der zwei schrankseitigen Scharnierteile in etwa gleich oder wenig größer als die in das türseitige Scharnierauge einführbare Bolzenlänge ist.

In einer zweiten Ausführungsform des erfindungsgemäßen Scharniers ist ein türseitiges Scharnierteil zweigeteilt und weist ein erstes und spiegelbildlich zu diesem ein zweites türseitiges Scharnierteil auf. In der Regel sind dieses erste und zweite Scharnierteil ein unteres und oberes türseitiges Scharnierteil. Bei auf- oder abschwenkbaren Türen oder auch Fenstern mit horizontal angeordneten Scharnieren können das erste und zweite Scharnierteil auch ein rechtes und linkes tür- oder fensterseitiges Scharnierteil sein. Zur Vereinfachung werden diese im folgenden nur als oberes und unteres türseitiges Scharnierteil bezeichnet. Um ein Einsetzen und Lösen eines schrankseitigen, insbesondere einteiligen Scharnierteils schnell und unkompliziert bewerkstelligen zu können, sind das obere und untere türseitige Scharnierteil relativ zueinander verstellbar, d.h., axial zueinander verschiebbar befestigt.

Analog zur ersten Scharnierausbildung wird die axiale Verstellbarkeit über jeweils ein Langloch erreicht, welches in einem Befestigungsbereich des unteren und oberen türseitigen Scharnierteils oder auch in der Tür ausgebildet sein kann.

Die zweiteilige Ausbildung des türseitigen Scharnierteils ist besonders vorteilhaft, weil ein Wechsel des Türanschlags zum Beispiel von einem Links- auf einen Rechtsanschlag einfach und schnell durchgeführt werden kann. Ein weiterer Vorteil besteht darin, daß der Anschlagwechsel mit einer Konstruktion eines zweigeteilten türseitigen Scharnierteil möglich ist, so daß die Lagerhaltung und Montage rationeller gestaltet werden können.

Zweckmäßig ist außerdem, daß durch die Ausbildung und Anordnung des zweigeteilten türseitigen Scharnierteils und des schrankseitigen Scharnierteils ein Öffnungswinkel von 180 Grad gewährleistet ist.

Das türseitige zweigeteilte Scharnierteil ist in einer zweckmäßigen Weise an der Außenfront der Tür befestigt. Die Langlöcher sind dann bevorzugt in der Tür ausgebildet, um eine geschlossene und ästhetisch anspruchsvolle Außenfläche eines Scharniers bzw. der Türfront zu erreichen. Die Länge des Langlochs ist dem erforderlichen Verstellweg zum Lösen bzw. zum Einsetzen des schrankseitigen Scharnierteils angepaßt. Das bevorzugt einteilige schrankseitige Scharnierteil mit beiderseits einer Scharnierabstützung überstehenden Scharnierbolzen oder aber mit Lageraugen für Scharnierbolzen an dem oberen und unteren türseitigen Scharnierteil liegt im Schließzustand mit einem nahezu zylinderförmigen Bereich zwischen den türseitigen Scharnierteilen, wobei die Scharnierabstützung des schrankseitigen Scharnierteils mit der Außenkontur der türseitigen Scharnierteile fluchtet.

Besonders vorteilhaft ist es, daß aufgrund der Längsverschiebbarkeit des oberen und unteren Scharnierteils auch Fertigungstoleranzen der Scharnierteile bzw. der Schrankteile vor Ort bei der Montage kompensiert werden können.

Die vertikale Verstellbarkeit beider schrankseitigen Scharnierteile kann auch mit Hilfe eines im vertikalen Hohlprofil des Schrankes ausgebildeten Langlochs erreicht werden, in dem die in einer normalen Bohrung des Befestigungsflansches geführte Senkkopfschraube mit einer insbesondere einrastbaren Federmutter festlegbar und fixierbar ist.

Es ist vorteilhaft, daß die erfindungsgemäß ausgebildeten tür- und schrankseitigen Scharnierteile besonders einfach und robust aufgebaut und beispielsweise aus Gußeisen gefertigt sind.

Die Erfindung wird nachstehend anhand einer Zeichnung weiter erläutert. In dieser zeigen:
- Fig. 1: in schematischer Weise einen Querschnitt durch eine an einem Vertikalholm eines Schrankes befestigte erste Ausführungsform eines erfindungsgemäßen Türscharniers;
- Fig. 2: in einer schematisierten perspektivischen Darstellung eine bevorzugte Ausbildung der ersten Ausführungsform des erfindungsgemäßen Türscharniers;
- Fig. 3: eine schematisierte Ansicht des erfindungsgemäßen Türscharniers gemäß Fig. 2, wobei zur besseren Übersichtlichkeit das türseitige Scharnierteil weggelassen wurde;
- Fig. 4: einen schematisierten Querschnitt durch eine zweite Ausführungsform des erfindungsgemäßen Türscharniers;
- Fig. 5: eine schematisierte Ansicht des erfindungsgemäßen Türscharniers gemäß Fig. 4 und
- Fig. 6: eine schematisierte perspektivische Darstellung des erfindungsgemäßen Türscharniers gemäß Fig. 4 und 5.

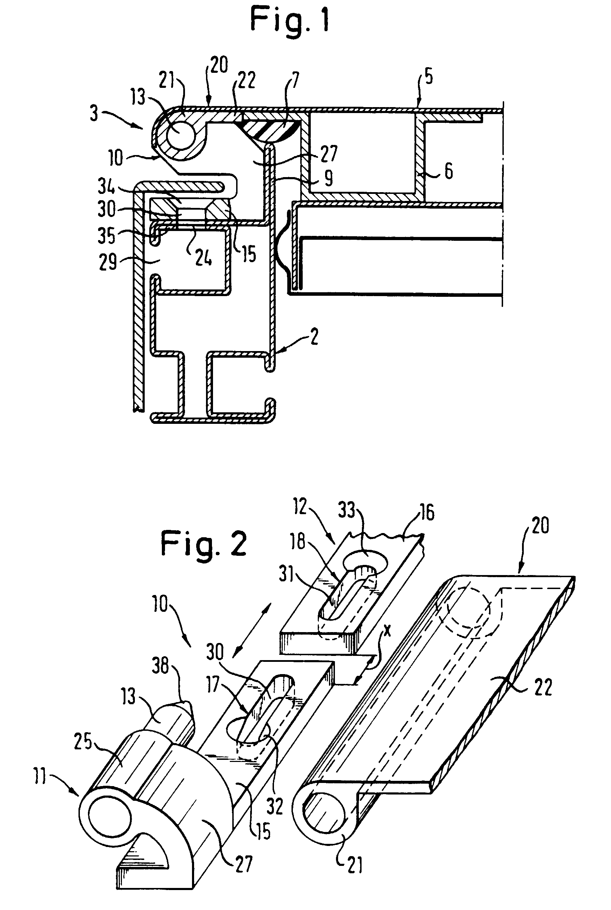

In Fig. 1 ist als Ausschnitt ein scharnierseitiger Eckbereich eines Geräteschrankes mit einer an einem Vertikalholm 2 mit Hilfe eines Scharniers 3 angelenkten Flügeltür 5 dargestellt. Die Tür 5 weist eine mit einem Dichtungssteg 9 am Vertikalholm 2 zusammenwirkende Dichtung 7 sowie ein Hutprofil 6 auf.

Das Türscharnier 3 besteht in diesem ersten Ausführungsbeispiel aus einem an der Tür 5 mit einem Scharnierband 22 befestigten, türseitigem Scharnierteil 20 mit einem eingerollten Scharnierauge 21, das in Fig. 2 zur besseren Übersicht neben einem schrankseitigen Scharnierteil 10 angeordnet ist.

Das schrankseitige Scharnierteil 10 ist erfindungsgemäß geteilt ausgebildet und weist als ein zweites schrankseitiges Scharnierteil 12 ein oberes schrankseitiges Scharnierteil 12 mit einem Scharnierbolzen 14 und als ein erstes schrankseitiges Scharnierteil 11 ein unteres schrankseitiges Scharnierteil 11 mit einem Scharnierbolzen 13 auf.

Da üblicherweise eine Tür oder auch ein Fenster über mindestens zwei Scharniere 3 an einem Schrank oder dergleichen angelenkt ist, sind an einem front- oder auch rückseitigen Vertikalholm 2 eines Schrankes bzw. eines Schrankgestelles zumindest vier schrankseitige Scharnierteile, nämlich zwei obere und zwei untere schrankseitige Scharnierteile 11, 12 anzubringen.

Zur Befestigung des oberen und unteren schrankseitigen Scharnierteils 11, 12 dient ein Befestigungsflansch 15, 16, der plattenförmig am Vertikalholm 2 anliegt und mit einem Befestigungsbereich 17, 18 versehen ist. Dabei weist der Befestigungsbereich 17 des unteren schrankseitigen Scharnierteils 11 ebenso wie der Befestigungsbereich 18 des spiegelbildlich ausgebildeten und angeordneten oberen schrankseitigen Scharnierteils 12 ein Langloch 30, 31 sowie eine Vertiefung 32, 33 zur Aufnahme einer der Befestigung der Scharnierteile 11, 12 dienenden Senkkopfschraube 34 auf. Die Länge der Langlöcher 30, 31, ihr jeweiliger Abstand zum zugeordneten Scharnierbolzen 13, 14 bzw. zum bolzenabgewandten Ende der Befestigungsflansche 15, 16 sind aufeinander abgestimmt und ermöglichen bei einem maximalen Verstellweg x ein Auseinanderschieben der schrankseitigen Scharnierteile 11, 12 derart, daß das türseitige Scharnierteil 20 bzw. das Scharnierauge 21 aus dem Eingriffsbereich der Scharnierbolzen 13, 14 gelangt, so daß die Schranktür 5 entfernt werden kann. Es besteht auch die Möglichkeit, das untere schrankseitige Scharnierteil 11 fest anzuordnen und lediglich das obere schrankseitige Scharnierteil 12 über einen entsprechend größeren Verstellweg nach oben zu verschieben, damit das türseitige Scharnierteil 20 bzw. das Scharnierauge 21 auch vom unteren Scharnierbolzen 11 abgehoben werden kann. Diese vertikale Verstellung eines oder beider schrankseitigen Scharnierteile 11, 12 erfordert lediglich ein Lockern der Senkkopfschraube(n) 34. Ein vollständiges Lösen bzw. Entfernen der Scharnierteile 11, 12 ist nicht nötig.

Aus Fig. 1 geht die vorteilhafte Befestigung des oberen bzw. unteren schrankseitigen Scharnierteils 12, 11 in einer Bohrung 24 eines Nutaußenschenkels 28 des Vertikalholms 2 hervor. Die bevorzugt einzusetzende einrastbare Federmutter, die in der quadratischen T-Nut 29 gehalten ist, ist nicht dargestellt.

Alternativ zu der gezeigten Verstellbarkeit des oder der schrankseitigen Scharnierteile 11, 12 kann auch über eine Langlochausbildung im Vertikalholm 2, also im Nutaußenschenkel 28 eine vertikale Verstellung ermöglicht werden. In diesem Fall erübrigt sich die Ausbildung der Langlöcher und es genügt eine normale Senkkopfschraubenbohrung in den Befestigungsflanschen 15, 16 der schrankseitigen Scharnierteile 11, 12.

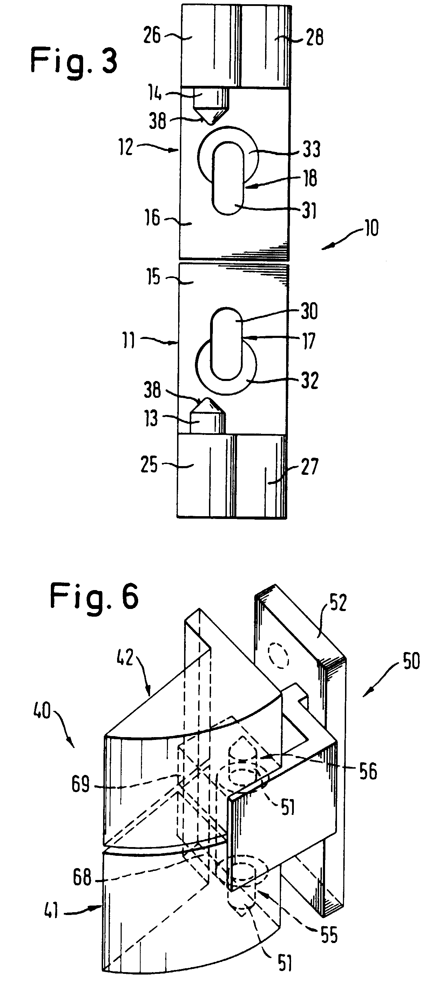

In Fig. 2 ist der Preßsitz des Scharnierbolzens 13 in einer hülsenartigen Aufnahme 25 erkennbar sowie die Ausbildung der unteren Scharnierbolzenabstützung 27. Das obere schrankseitige Scharnierteil 12 ist spiegelbildlich zum unteren Scharnierteil 11 ausgebildet und angeordnet. Auf die Darstellung des oberen Scharnierbolzens 14 mit der zugehörigen hülsenartigen Aufnahme 26 und der Scharnierbolzenabstützung 28 wurde verzichtet. Diese gehen aus der Fig. 3 hervor. In den Figuren wurden für identische Merkmale im übrigen identische Bezugszeichen verwendet. Das einteilige türseitige Scharnierteil 20 ist in gelöster Stellung dargestellt. Das Scharnierband 22, mit dem das türseitige Scharnierteil 20 an der Tür 5 befestigt ist, ist lediglich angedeutet.

In Fig. 3 ist in einer schematisierten Ansicht die zweigeteilte und spiegelbildliche Ausbildung des unteren und oberen Scharnierteils 11, 12 des schrankseitigen Scharnierteils 10 erkennbar. Die Befestigungsbereiche 17, 18 sind nahezu mittig angeordnet, und sie ermöglichen die vertikale Verstellung des einen oder aber beider schrankseitigen Scharnierteile 11, 12. Die Scharnierbolzen 13, 14, die kegelstumpfartige Einführungsbereiche 38 aufweisen, sind miteinander fluchtend und außerhalb der Längsachse der schrankseitigen Scharnierteile 11, 12 ausgebildet.

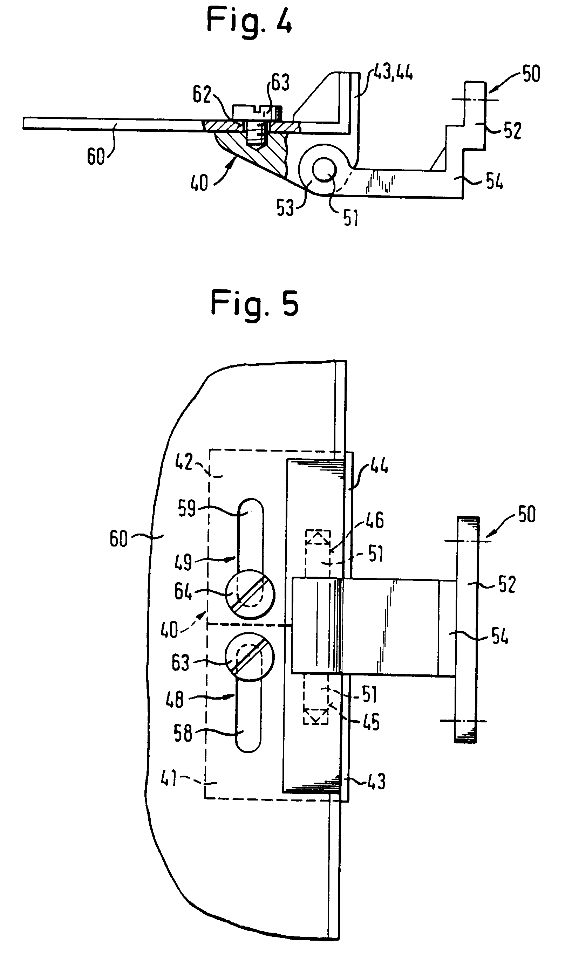

In den Fig. 4 bis 6 ist eine zweite Ausführung des erfindungsgemäßen Scharniers dargestellt. Ein beispielsweise an einem Schrank oder an einem Gestell (nicht dargestellt) über einen Befestigungsflansch 52 festlegbares Scharnierteil, welches als schrankseitiges Scharnierteil 50 bezeichnet wird, ist einteilig ausgebildet. Das schrankseitige Scharnierteil 50 weist eine abgewinkelte Scharnierabstützung 54 und einen nahezu zylinderförmigen Bereich 53 mit einem beidseitig überstehenden Scharnierbolzen 51 auf.

Das türseitige Scharnierteil 40 ist zweiteilig mit einem ersten türseitigen Scharnierteil 41 und einem zweiten türseitigen Scharnierteil 42, welche axial verstellbar sind, ausgebildet, so daß die Scharnierteile 40, 50 voneinander getrennt und auch ein Türwechsel von Rechts- auf Linksanschlag mühelos und insbesondere von einer Arbeitskraft durchgeführt werden kann. Die türseitigen ersten und zweiten Scharnierteile 41, 42, welche als obere und untere Scharnierteile 41, 42 angeordnet sind, weisen in diesem Ausführungsbeispiel jeweils einen Aufnahmebereich 55, 56 mit Lageraugen 45, 46 für den Scharnierbolzen 51 des schrankseitigen Scharnierteils 50 auf. Außerdem ist sowohl im unteren als auch im oberen türseitigen Scharnierteil 41, 42 ein Befestigungsbereich 48, 49 mit einem Langloch 58, 59 zum axialen Verstellen und Befestigen der zwei türseitigen Scharnierteile 41, 42 ausgebildet. Alternativ zu dieser Ausbildung kann auch die Tür 60 in den entsprechenden Bereichen mit einem Langloch 62 versehen sein. Zur Fixierung des zusammengesetzten Scharniers wirkt ein Befestigungselement 63, beispielsweise eine Schraube, jeweils mit einem Schraubgewinde im unteren bzw. oberen türseitigen Scharnierteil 41, 42 zusammen.

Das türseitige untere und obere Scharnierteil 41, 42 weist außerdem einen Führungsbereich 43, 44 auf, der jeweils nahezu rechtwinklig von den Aufnahmebereichen 55, 56 absteht und an einer Türkante anliegt. Im Schließzustand der Tür 60 fluchtet die Scharnierabstützung 54 des schrankseitigen Scharnierteils 50 mit den Aufnahmebereichen 55, 56 des unteren und oberen türseitigen Scharnierteils 41, 42, während der nahezu zylinderförmige Bereich 53 in Ausnehmungen 68, 69 des unteren und oberen türseitigen Scharnierteils 41, 42 aufgenommen ist.

Ein Scharnier mit einem auf einer Außenseite einer Tür 60 montierbaren zweiteiligen Scharnierteil 40 und einem einteiligen schrankseitigen Scharnierteil 50 genügt somit in besonderem Maße den funktionellen, fertigungstechnischen und ästhetischen Anforderungen.

## Patentansprüche

1. Scharnier, insbesondere Türscharnier für Schalt- und Geräteschränke, mit einem türseitigen Scharnierteil (20,40) und einem schrankseitigen Scharnierteil (10; 50), die über mindestens einen Scharnierbolzen (13, 14;51) miteinander in Dreheingriff stehen,
dadurch **gekennzeichnet**,
daß wenigstens ein Scharnierteil, welches das türseitige Scharnierteil (40) oder das schrankseitige Scharnierteil (10) ist, zweiteilig ausgebildet ist und aus einem ersten und zweiten türseitigen Scharnierteil (41,42) bzw. einem ersten und zweiten schrankseitigen Scharnierteil (11,12) besteht,
daß das erste und zweite türseitige Scharnierteil (41,42) bzw. das erste und zweite schrankseitige Scharnierteil (11,12) spiegelbildlich zueinander ausgebildet sowie unabhängig voneinander fixierbar und zum Einsetzen und Lösen des jeweils anderen Scharnierteils, welches bei einem zweiteilig ausgebildeten türseitigen Scharnierteil (40) mit erstem und zweiten türseitigen Scharnierteil (41, 42) das schrankseitige Scharnierteil (50) und bei einem zweiteilig ausgebildeten schrankseitigen Scharnierteil (10) mit erstem und zweiten schrankseitigen Scharnierteil (11,12) das türseitige Scharnierteil (20) ist, relativ zueinander in Achsrichtung und unabhängig voneinander verstellbar sind.

2. Scharnier nach Anspruch 1,
dadurch **gekennzeichnet**,
daß das zweiteilig ausgebildete schrankseitige Scharnierteil (10) als erstes schrankseitiges Scharnierteil ein unteres schrankseitiges Scharnierteil (11) und als zweites schrankseitiges Scharnierteil ein oberes schrankseitiges Scharnierteil (12) aufweist,
daß am unteren und am oberen schrankseitigen Scharnierteil (11,12) jeweils ein Befestigungsflansch (15,16) mit einem Befestigungsbereich (17,18) vorgesehen ist und daß der Befestigungsbereich (17,18) für eine verstellbare Festlegung des zugehörigen unteren oder oberen schrankseitigen Scharnierteils (11,12) ausgebildet ist.

3. Scharnier nach Anspruch 2,
dadurch **gekennzeichnet**,
daß das türseitige Scharnierteil (20) einteilig ausgebildet und zwischen dem unteren und oberen schrankseitigen Scharnierteil (11,12) angeordnet ist und daß ein jeweils am unteren und oberen schrankseitigen Scharnierteil (11,12) angeordneter unterer und oberer Scharnierbolzen (13,14) in ein Scharnierauge (21) des türseitigen Scharnierteils (20) oder ein beidseitig überstehender Scharnierbolzen am türseitigen Scharnierteil (20) in Lageraugen des unteren und oberen schrankseitigen Scharnierteils (11,12) eingreift.

4. Scharnier nach einem der Ansprüche 2 oder 3,
dadurch **gekennzeichnet**,
daß zwischen den Befestigungsflanschen (15, 16) des unteren schrankseitigen Scharnierteils (11) und des oberen schrankseitigen Scharnierteils (12) ein Verstellweg ausgebildet ist, welcher nahezu gleich groß oder größer als die in das türseitige Scharnierauge (21) einführbare Scharnierbolzenlänge (13,14) ist.

5. Scharnier nach einem der vorhergehenden Ansprüche 2 bis 4,
dadurch **gekennzeichnet**,
daß der untere und obere Scharnierbolzen (13,14) jeweils in einer hülsenartigen Aufnahme (25,26) fest aufgenommen und über eine Scharnierbolzenabstützung (27,28) am Befestigungsflansch (15,16) des unteren bzw. oberen schrankseitigen Scharnierteils (11,12) gehalten sind.

6. Scharnier nach einem der vorhergehenden Ansprüche 2 bis 5,
dadurch **gekennzeichnet**,
daß das untere und obere schrankseitige Scharnierteil (11,12) an einem Schrank, beispielsweise an einem Vertikalholm (2) befestigt sind, daß das türseitige Scharnierteil (20) auf den unteren Scharnierbolzen (13) aufsetzbar und das mit dem Scharnierbolzen (14) in das Scharnierauge (21) eingeführte obere schrankseitige Scharnierteil (12) längsverstellbar und/oder arretierbar ist.

7. Scharnier nach einem der vorhergehenden Ansprüche 2 bis 6,
dadurch **gekennzeichnet**,
daß im Befestigungsbereich (17,18) des unteren und oberen schrankseitigen Scharnierteils (12,13) ein Langloch (30,31) und eine Vertiefung (32,33) zur Aufnahme einer Senkkopfschraube (34) ausgebildet sind, wobei die axiale Länge des Langlochs (30,31) vom erforderlichen Verstellweg x zum Lösen des türseitigen Scharnierauges (21) bestimmt ist.

8. Scharnier nach Anspruch 1,
dadurch **gekennzeichnet**,
daß ein zweiteilig ausgebildetes türseitiges Scharnierteil (40) als erstes türseitiges Scharnierteil (41) ein unteres türseitiges Scharnierteil und als zweites türseitiges Scharnierteil (42) ein oberes türseitiges Scharnierteil (42) aufweist und daß beide türseitigen Scharnierteile (41,42) jeweils einen Aufnahmebereich (55,56) mit Lageraugen (45,46) zur Aufnahme eines beidseitig am schrankseitigen Scharnierteil (50) überstehenden Scharnierbolzens (51) aufweisen oder mit einem unteren und oberen Scharnierbolzen zum Einführen in ein am schrankseitigen Scharnierteil ausgebildetes Scharnierauge versehen sind.

9. Scharnier nach Anspruch 8,
dadurch **gekennzeichnet**,
daß das untere und obere türseitige Scharnierteil (41,42) jeweils einen Befestigungsbereich (48,49) zum axialen Verstellen und Fixieren der türseitigen Scharnierteile (41,42) aufweisen und daß nahezu rechtwinklig zu den Befestigungsbereichen (48,49) Führungsflansche (43,44) ausgebildet sind, die bei wahlweisem Türanschlag eine Türkante umgreifen.

10. Scharnier nach Anspruch 9,
dadurch **gekennzeichnet**,
daß jeder Befestigungsbereich (48,49) ein in der Tür (60) oder im unteren und oberen türseitigen Scharnierteil (41,42) ausgebildetes Langloch (62; 58,59) zur Aufnahme eines Befestigungselementes (63,64) aufweist und daß die Länge der Langlöcher (62; 58,59) dem Verstellweg zum Lösen und Einsetzen des schrankseitigen Scharnierteils (50) entspricht.

11. Scharnier nach einem der vorhergehenden Ansprüche 8 bis 10,
dadurch **gekennzeichnet**,
daß das schrankseitige Scharnierteil (50) mit einem an einem Schrankteil festlegbaren Befestigungsflansch (52), einer abgewinkelten Scharnierabstützung (54) und einem nahezu zylinderförmigen Bereich (53) versehen ist und daß der zylinderförmige Bereich (53), in dem der Scharnierbolzen (51) oder Lageraugen angeordnet sind, von Ausnehmungen (68,69) des unteren und oberen türseitigen Scharnierteils (41,42) aufgenommen ist.

12. Scharnier nach einem der vorhergehenden Ansprüche,
dadurch **gekennzeichnet**,
daß die zweiteiligen oder einteiligen schrankseitigen Scharnierteile (11,12; 50) in einem Außenschenkel (28) einer T-Nut (29) des Vertikalholms (2) des Schrankes mit Hilfe einer insbesondere einrastbaren Federmutter fixierbar sind.

13. Scharnier nach einem der vorhergehenden Ansprüche,
dadurch **gekennzeichnet**,
daß die schrankseitigen Scharnierteile (11,12; 50) als Aluminiumdruckgußteile ausgebildet sind und daß die Scharnierbolzen (13,14; 51) mit einem kegelstumpfförmigen Einführbereich (38) versehen sind.

## Claims

1. Hinge, particularly a door hinge for switch and instrument cabinets, with a door-side hinge part (20, 40) and a cabinet-side hinge part (10; 50) which are in rotary engagement with one another by means of at least one hinge pin (13, 14; 51),
**characterized** in
that at least one hinge part which is the door-side hinge part (40) or the cabinet-side hinge part (10) is constructed from two portions and has a first and a second door-side hinge portion (41, 42) and a first and a second cabinet-side hinge portion (11, 12) respectively,
that the first and second door-side hinge portions (41, 42) and the first and second cabinet-side hinge portions (11, 12), respectively are constructed homologously to each other and can be fixed independently of one another, and are axially adjustable relative to one another and independently adjustable of one another for insertion and release of in each case the other hinge part which in the case of a door-side hinge part (40) which is constructed from two portions and has the first and second door-side hinge portions (41, 42) is the cabinet-side hinge part (50) and in the case of a cabinet-side hinge part (10) which is constructed from two portions and has the first and second hinge portions (11, 12) is the door-side hinge part (20).

2. Hinge according to claim 1,
**characterized** in that
the cabinet-side hinge part (10) which is constructed from two portions has as the first cabinet-side hinge portion a lower cabinet-side hinge portion (11) and as the second cabinet-side hinge portion an upper cabinet-side hinge portion (12),
on the lower and on the upper cabinet-side hinge portions (11, 12) in each case is provided a mounting flange (15, 16) having a fastening area (17, 18), and said fastening area (17, 18) is constructed for an adjustable fixing of the associated lower or upper cabinet-side hinge-portion (11, 12).

3. Hinge according to claim 2,
**characterized** in that
the door-side hinge part (20) is constructed integrally and is positioned between the lower and the upper cabinet-side hinge portions (11, 12), and a lower and an upper hinge pin (13, 14) placed in each case on the lower and upper cabinet-side hinge portions (11, 12) engages in a hinge hole (21) of the door-side hinge part (20) or a hinge pin projecting on either side on the door-side hinge part (20) engages in bearing holes of the lower and upper cabinet-side hinge portions (11, 12).

4. Hinge according to claims 2 or 3,
**characterized** in that
a travel path is formed between the mounting flanges (15, 16) of the lower cabinet-side hinge portion (11) and the upper cabinet-side hinge portion (12) and which is virtually equal to or greater than the hinge pin length (13, 14) insertable in the door-side hinge hole (21).

5. Hinge according to one of the preceding claims 2 to 4,
**characterized** in that
the lower and upper hinge pins (13, 14) in each case is firmly received in a sleeve-like receptacle (25, 26) and are held on the mounting flange (15, 16) of the lower and the upper cabinet-side hinge portions (11, 12) respectively by means of a hinge pin support (24, 28).

6. Hinge according to one of the preceding claims 2 to 5,
**characterized** in that
the lower and upper cabinet-side hinge portions (11, 12) are fixed to a cabinet, e.g. to a vertical beam (2),
the door-side hinge part (20) can be mounted on the lower hinge pin (13), and
the upper cabinet-side hinge portion (12) inserted with the hinge pin (14) in the hinge-hole (21) is longitudinally adjustable and/or lockable.

7. Hinge according to one of the preceding claims 2 to 6,
**characterized** in that
in the fastening area (17, 18) of the lower and upper cabinet-side hinge portions (12, 13) is formed an elongated hole (30, 31) and a depression (32, 33) for receiving a countersunk screw (34), the axial length of the elongated hole (30, 31) being determined by the necessary travel path x for releasing the door-side hinge hole (21).

8. Hinge according to claim 1,
**characterized** in that
a door-side hinge part (40) which is constructed from two portions has as a first door-side hinge portion (41) a lower door-side hinge portion and as a second door-side hinge portion (42) an upper door-side hinge portion (42), and
each of said door-side hinge portions (41, 42) has a reception area (55, 56) with bearing holes (45, 46) for receiving a hinge pin (51) projecting on either side of the cabinet-side hinge part (50) or are provided with a lower and an upper hinge pin for insertion in a hinge hole formed on the cabinet-side hinge part.

9. Hinge according to claim 8,
**characterized** in that
the lower and upper door-side hinge portions (41, 42) in each case has a fastening area (48, 49) for axial adjustment and fixing of the door-side hinge portions (41, 42), and
guide flanges (43, 44) are constructed virtually right angles to the fastening areas (48, 49) and engage around a door edge for a random door stop.

10. Hinge according to claim 9,
**characterized** in that
each of said fastening areas (48, 49) has an elongated hole (62; 58, 59) for receiving a fastening element (63, 64), said elongated hole being formed in the door (60) or in the lower and upper door-side hinge portions (41, 42), and the length of the elongated holes (62; 58, 59) corresponds to the travel path for releasing and inserting the cabinet-side hinge part (50).

11. Hinge according to one of the claims 8 to 10,
**characterized** in that
the cabinet-side hinge part (50) is provided with a mounting flange (52) fixable on a cabinet part, an angular hinge support (54) and a virtually cylindrical area (53), and
that the cylindrical area (53) in which are located the hinge pin (51) or bearing holes is received by recesses (68, 69) of the lower or upper door-side hinge portion (41, 42).

12. Hinge according to one of the preceding claims,
**characterized** in that
the cabinet-side hinge parts (11, 12; 50) being constructed integrally or from two portions can be fixed in an outside (28) of a T-slot (29) of the vertical beam (2) of the cabinet, in particular with the aid of a lockable spring nut.

13. Hinge according to one of the preceding claims,
**characterized** in that
the cabinet-side hinge parts (11, 12: 50) are constructed as aluminium die castings, and
the hinge pins (13, 14; 51) are provided with frustum-like insertion areas (38).

## Revendications

1. Charnière, en particulier charnière de porte pour armoire électrique et armoire à instruments, avec une partie de charnière côté porte (20, 40) et une partie de charnière côté armoire (10 ; 50), qui sont en prise rotative l'une avec l'autre par l'intermédiaire d'au moins une tige de charnière (13, 14 ; 51), ***caractérisée en ce qu'***au moins une partie de charnière, qui est la partie de charnière côté porte (40) ou la partie de charnière côté armoire (10), est formée en deux parties et se compose d'une première et d'une deuxième parties (41, 42) de charnière côté porte ou d'une première et d'une deuxième (11. 12) parties de charnière côté armoire, ***en ce que*** la première et la deuxième parties (41, 42) de charnière côté porte ou la première et la deuxième parties (11, 12) de charnière côté armoire sont conformées symétriques miroir l'une de l'autre et peuvent être fixées indépendamment l'une de l'autre et, afin d'engager et de libérer l'autre partie de charnière respective, laquelle est la partie de charnière côté armoire (50) dans le cas d'une partie de charnière côté porte (40) conformée en deux parties avec une première et une deuxième parties (41, 42) de charnière côté porte et est la partie de charnière côté porte (20) dans le cas d'une partie de charnière côté armoire (10) conformée en deux parties avec une première et une deuxième parties (11, 12) de charnière côté armoire, peuvent être déplacées indépendamment l'une de l'autre et l'une par rapport à l'autre dans la direction axiale.

2. Charnière selon la Revendication 1, ***caractérisée en ce que*** la partie de charnière côté armoire (10) conformée en deux parties présente comme première partie de charnière côté armoire une partie inférieure (11) de charnière côté armoire et comme deuxième partie de charnière côté armoire une partie supérieure (12) de charnière côté armoire, ***en ce qu'***il est prévu sur chacune des parties inférieure et supérieure (11, 12) de charnière côté armoire, une bride de fixation (15, 16) avec une zone de fixation (17, 18), et ***en ce que*** la zone de fixation (17, 18) est conformée pour une fixation réglable de la partie inférieure ou supérieure (11, 12) de charnière côté armoire associée.

3. Charnière selon la Revendication 2, ***caractérisée en ce que*** la partie de charnière côté porte (20) est conformée d'une seule pièce et est placée entre les parties inférieure et supérieure (11, 12) de charnière côté armoire et ***en ce que*** des tiges inférieure et supérieure (13, 14) de charnière placées sur les parties inférieure et supérieure (11. 12) de charnière côté armoire s'engagent dans un oeillet (21) de charnière de la partie de charnière côté porte (20) ou une tige de charnière en saillie des deux côtés sur la partie de charnière côté porte (20) s'engage dans des oeillets de palier des parties inférieure et supérieure (11, 12) de charnière côté armoire.

4. Charnière selon l'une des Revendications 2 ou 3, ***caractérisée en ce qu'***entre les brides de fixation (15, 16) de la partie inférieure (11) de charnière côté armoire et de la partie supérieure (12) de charnière côté armoire est formée une course de déplacement qui est approximativement égale ou supérieure à la longueur de tige (13, 14) de charnière pouvant s'insérer dans l'oeillet (21) de charnière côté porte.

5. Charnière selon l'une quelconque des Revendications 2 à 4 précédentes, ***caractérisée en ce que*** les tiges inférieure et supérieure (13, 14) de charnière sont logées fixement chacune dans un logement en forme de douille (25, 26) et sont maintenues par un appui (27, 28) de tige de charnière sur la bride de fixation (15, 16) de la partie inférieure ou supérieure (11, 12) de charnière côté armoire.

6. Charnière selon l'une quelconque des Revendications 2 à 5 précédentes, ***caractérisée en ce que*** les parties inférieure et supérieure (11, 12) de charnière côté armoire sont fixées à une armoire, par exemple sur un montant vertical (2), ***en ce que*** la partie de charnière côté porte (20) peut se placer sur la tige inférieure (13) de charnière et la partie supérieure (12) de charnière côté armoire introduite avec la tige (14) de charnière dans l'oeillet (21) de charnière est réglable en longueur et/ou immobilisable.

7. Charnière selon l'une quelconque des Revendications 2 à 6 précédentes, ***caractérisée en ce que****,* dans la zone de fixation (17, 18) des parties inférieure et supérieure (12, 13) de charnière côté armoire, sont formés un trou allongé (30, 31) et un renfoncement (32, 33) pour recevoir une vis à tête fraisée (34), la longueur axiale du trou allongé (30,31) étant déterminée par la course de déplacement x nécessaire pour dégager oeillet (21) de charnière côté porte.

8. Charnière selon la Revendication 1, ***caractérisée en ce qu'***une partie de charnière côté porte (40) conformée en deux parties présente, comme première partie (41) de charnière côté porte. une partie inférieure de charnière côté porte, et, comme deuxième partie (42) de charnière côté porte, une partie supérieure (42) de charnière côté porte, et ***en ce que*** les deux parties de charnière côté porte (41, 42) présentent chacune une zone de logement (55, 56) avec des oeillets supports (45, 46) afin de recevoir une tige de charnière (51) en saillie des deux côtés sur la partie de charnière côté armoire (50) ou sont munies d'une tige inférieure de charnière et d'une tige supérieure de charnière destinées à s'introduire dans un oeillet de charnière formé sur une partie de charnière côté armoire.

9. Charnière selon la Revendication 8, ***caractérisée en ce que*** les parties inférieure et supérieure (41, 42) de charnière côté porte présentent chacune une zone de fixation (48, 49) pour le réglage axial et la fixation des parties (41, 42) de charnière côté porte et **en ce que**, presque perpendiculairement aux zones de fixation (48, 49) sont formées des brides de guidage (43, 44) qui entourent un bord de porte lorsqu'une butée de porte optionnelle est présente.

10. Charnière selon la Revendication 9, ***caractérisée en ce que*** chaque zone de fixation (48, 49) présente un trou allongé (62 ; 58, 59) dans la porte (60) ou dans la partie inférieure et supérieure (41, 42) de charnière côté porte, afin de recevoir un élément de fixation (63, 64) et ***en ce que*** la longueur des trous allongés (62 ; 58, 59) correspond à la course de réglage pour dégager et introduire la partie de charnière côté armoire (50).

11. Charnière selon l'une quelconque des Revendications 8 à 10, ***caractérisée en ce que*** la partie de charnière côté armoire (50) est munie d'une bride de fixation (52) pouvant se fixer sur une partie d'armoire, d'un appui de charnière coudé (54) et d'une zone quasiment cylindrique (53) et ***en ce que*** la zone quasiment cylindrique (53), dans laquelle sont placés la tige (51) de charnière ou des oeillets de charnière, est reçue par des logements (68, 69) des parties inférieure et supérieure (41, 42) de charnière côté porte.

12. Charnière selon l'une quelconque des Revendications précédentes, ***caractérisée en ce que*** les parties de charnière côté armoire en une ou deux pièces (11, 12 ; 50) peuvent se fixer dans une branche extérieure (28) d'une rainure en T (29) du montant vertical (2) de l'armoire. à l'aide d'un écrou à ressort, en particulier encliquetable.

13. Charnière selon l'une quelconque des Revendications précédentes, ***caractérisée en ce que*** les parties de charnière côté armoire (11, 12 ; 50) sont des pièces en aluminium moulé et ***en* ce que** les tiges (13, 14; 51) de charnière sont munies d'une zone d'introduction (38) de forme tronconique.
